# EUROPEAN PATENT SPECIFICATION

(11) **EP 2 762 242 B1**
(45) Date of publication and mention of the grant of the patent: **04.03.2015**
(21) Application number: 13425021.6
(22) Date of filing: 31.01.2013
(51) Int. Cl.: B21C 37/29, B21D 26/037, F16L 13/14, F16L 41/02

(54) **Press-fitting**
Presspassung
Pressage

(43) Date of publication of application: 06.08.2014
(73) Proprietor: Raccorderie Metalliche S.p.A., 46010 Marcaria MN (IT)
(72) Inventor: Ceccardi, Pier Luigi, 46010 Levata di Curtatone (MN) (IT)
(74) Representative: Spina, Alessandro

(56) References cited:
- EP-A1- 2 196 713
- DE-A1- 19 816 244
- FR-A1- 2 679 159
- FR-A1- 2 916 828
- US-A- 5 121 625

## Description

The present invention generally relates to the field of metal fittings and in particular to a press-fitting.

It is known that press-fittings are used to join pipes together in a permanent way. To this aim it is necessary that the pipes to be connected to one another are held together securely through the press-fitting and also that tight sealing is ensured, so that fluids conveyed through the pipes joined by the press-fitting cannot flow out therefrom. For this purpose in correspondence to one or more ends of a press-fitting a sealing element is provided, for example an O-ring. In order to arrange a sealing element within a press-fitting without reducing its internal diameter and to hold the sealing element during the insertion of a pipe into the press-fitting, bulges having a hook shape in a longitudinal section are formed at the free ends of press-fittings. An example of such bulges is described in the Italian patent 1290534 in the name of the applicant.

Known press-fittings of a straight type are suitable for joining two aligned pipes. L-shaped press-fitting used for joining two pipes which meet with one another e.g. at right angles are also known, as well as T-shaped press-fittings used for joining three pipes which meet with each other. Press-fittings of the latter type include a T-shaped body made up of a longitudinal duct and a branch portion which extends perpendicularly thereto from an intermediate portion thereof.

Press-fittings are made of different materials including carbon steel and stainless steel. Stainless steel allows in particular to obtain good mechanical strength and at the same time to ensure high corrosion resistance.

In order to manufacture T-shaped press-fittings with materials such as carbon steel and stainless steel it is known to weld straight pipes together. A first pipe intended to form the longitudinal duct of the press-fitting is cut to a predefined size and a hole is subsequently bored radially at an intermediate portion thereof. A second pipe intended to form the branch portion of the press-fitting is subsequently secured by welding to the first pipe in correspondence of its radial hole.

This type of manufacturing process involves risks concerning the sealing of the press-fitting at the weld joint between the pipes when weldings are not perfectly performed.

Moreover, this manufacturing process requires the separate preparation of the single pipes which will form the fitting, resulting in times and costs that are considered too high by those skilled in the art.

In order to solve these problems press-fittings made of carbon steel or stainless steel manufactured as single pieces by micro casting processes have been developed. Despite the undoubted advantages in terms of sealing due to the fact that a press-fitting is made as a single piece and not by joining straight tubes by welding, a micro casting process is anyway relatively expensive due to complexity of the molds and to finishing operations necessary on the casted parts.

DE 198 16 244 A1 discloses a press-fitting comprising a T-shaped body made of stainless steel or carbon steel and consisting of a duct extending in a longitudinal direction and of a branch portion extending perpendicularly thereto in a transverse direction from an intermediate portion of the duct, whereby the T-shaped body is formed as a single piece by way of a hydroforming process.

FR 2679159 A1 discloses a method for the manufacturing of a T-shaped press-fitting made of stainless steel or carbon steel comprising the steps of providing a mold comprising a first cylindrical cavity and a second cylindrical cavity extending perpendicularly thereto from an intermediate portion thereof; arranging a pipe in the first cylindrical cavity, the pipe having a diameter corresponding to the diameter of the first cavity; tightly connecting the ends of the pipe to conduits suitable for feeding a fluid under pressure; feeding a fluid in the pipe arranged in the mold from both its ends at a predefined pressure, so that the pipe wall is extruded along the second cylindrical cavity.

A similar method is disclosed by FR 2916828 A1.

Despite the fact that several technologies for the manufacturing of T-shaped press-fittings are available, there is still the need for improving them , which is an object of the present invention. Said object is achieved with a T-fitting, whose main features are specified in claim 1 and with a manufacturing method, whose characteristics are specified in claim 7, while other features are specified in the remaining claims.

An idea of solution underlying the present invention is to manufacture a single piece press-fitting made of stainless steel or carbon steel by way of a hydroforming process. It is also an idea of solution underlying the invention to provide the press-fitting with a pair of flat walls formed during the hydroforming process at the sides of the T-shaped body in correspondence to the branch portion, the flat walls extending from a center plane of the longitudinal duct in the transverse direction towards the free end of the branch portion. The flat walls allow to maintain the thickness of the press-fitting constant in its central portion, thereby compensating for the typical tendency of an extrusion process to reduce the thickness of the branch portion of a hydroformed press-fitting, thus potentially penalizing its mechanical performance.

The main advantage offered by the invention is to manufacture a single piece T-shaped press-fitting by way of a process that is much simpler and more cost effective then micro casting, both regarding molds and manufacturing times.

Another advantage offered by the invention is that no deburring operations, that are typical of micro casting processes, are needed for a finished press-fitting, which results in a higher cost effectiveness of the manufacturing process.

Further advantages and features of the press-fitting according to the present invention will become clear to those skilled in the art from the following detailed and non-limiting description of an embodiment thereof with reference to the accompanying drawings in which:
- Fig. 1 is a perspective view showing a press-fitting according to the present invention;
- Fig. 2 is a longitudinal sectional view taken along line II-II of Fig. 1 and showing a T-shaped press-fitting according to the present invention;
- Figures 3a to 3d schematically show longitudinal sectional views of a T-shaped press-fitting according to the invention during subsequent steps of its hydroforming process.

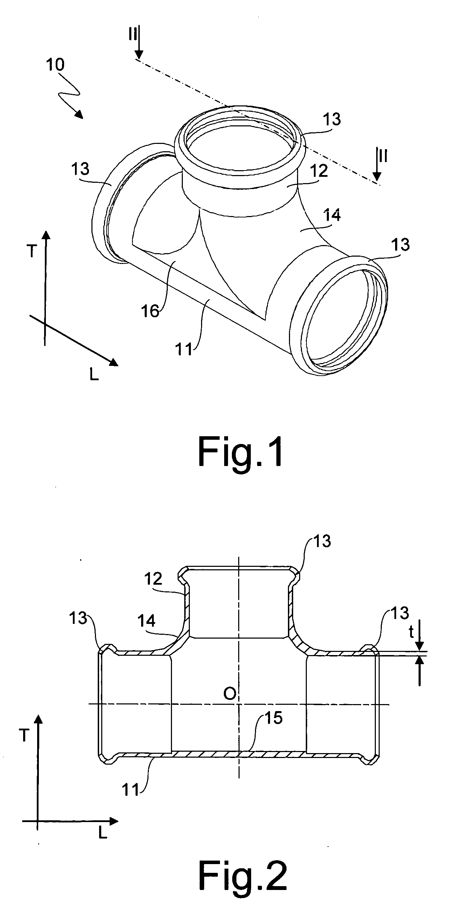

Referring to figures 1 and 2, the T-shaped press-fitting according to the invention is generally designated by reference numeral 10. The press-fitting 10 is made of stainless steel or carbon steel and comprises a T-shaped body consisting of a duct 11 which extends in a longitudinal direction L and of a branch portion 12 which extends perpendicularly thereto in a transverse direction T from an intermediate portion thereof.

In order to ensure sealing with respect to fluids that in use flow through the press-fitting 10, tight sealing elements such as e.g. O-rings are provided at one or more of its free ends. To this aim bulges 13 having a hook shape in longitudinal section are formed at these ends.

In the illustrated embodiment, all the three free ends of the T-shaped body are provided with such hook-shaped bulges 13, but it will be appreciated that the press-fitting might also include one or more threaded ends, suitable to allow connection of pipes through corresponding threaded sleeves, as well as smooth ends suitable for the connection of crimping joints well known to those skilled in the art.

As shown in fig. 1, the three portions of the T-shaped body all preferably have the same length with respect to a point O determined by the intersection between the axis of the longitudinal duct 11 and the axis of the branch portion 12. This feature simplifies the manufacturing process of the T-fitting, allows easily assembling thereof with converging pipes oriented in mutually perpendicular directions, because its three portions have the same length in all directions, and consequently simplifies the design of a system of pipes connected through the T-shaped press-fitting.

A connecting portion 14 arranged between the longitudinal duct 11 and the branch portion 12 is filleted and the fillet radius preferably ends at the straight ends configured to receive the pipes intended to be joined with the press-fitting 10. This feature, which as it will be seen hereinafter facilitates the hydroforming process, allows to improve fluid circulation through the press-fitting while minimizing head losses.

The three portions of the T-shaped body of the press-fitting 10 are preferably bored from the respective free ends to the filleted connecting portion 14. The thickness t of the walls of the portions of the T-shaped body resulting from boring is schematically indicated in figure 2 by way of dimension lines. This allows to obtain the maximum coupling accuracy between the press-fitting and the pipes intended to be joined therewith, and further allows to obtain an intermediate portion 15 in the longitudinal duct 11 having a higher thickness, which provides the press-fitting 10 with a flexural rigidity higher than the rigidity it would have should the longitudinal duct 11 be entirely bored.

As shown in Figure 2, the intermediate portion 15 of the longitudinal duct 11 is arranged at the branch portion 12 and it extends substantially along its whole diameter. The free ends of the intermediate portion 15 form abutments suitable to limit the insertion depth of pipes into the longitudinal duct 11 of the press-fitting 10, so that they do not obstruct the branch portion 12 thus penalizing the flow of fluids passing through the press fitting 10 either towards the branch portion 12 or therefrom.

According to the present invention, the T-shaped press-fitting is manufactured as a single piece by way of a hydroforming process. This process, already used in the field e.g. for the manufacturing of bicycle frames, requires specific features for the application to the manufacturing of T-shaped press-fittings.

According to the present invention for the manufacturing of a T-shaped press-fitting a mold (not shown) is prepared, which comprises a first cylindrical cavity with a diameter corresponding to the outer diameter of the longitudinal duct 11. In the case of the so-called "reduced" T-shaped press-fittings, i.e. press-fittings wherein the diameter of the intermediate portion of the longitudinal duct 11 is smaller than the diameter of the ends, the cylindrical cavity will correspondingly comprise an intermediate portion having a smaller diameter than that of the end portions.

The mold comprises a second cylindrical cavity, for example having the same diameter of the first one, which extends perpendicularly to the first cavity from an intermediate portion thereof.

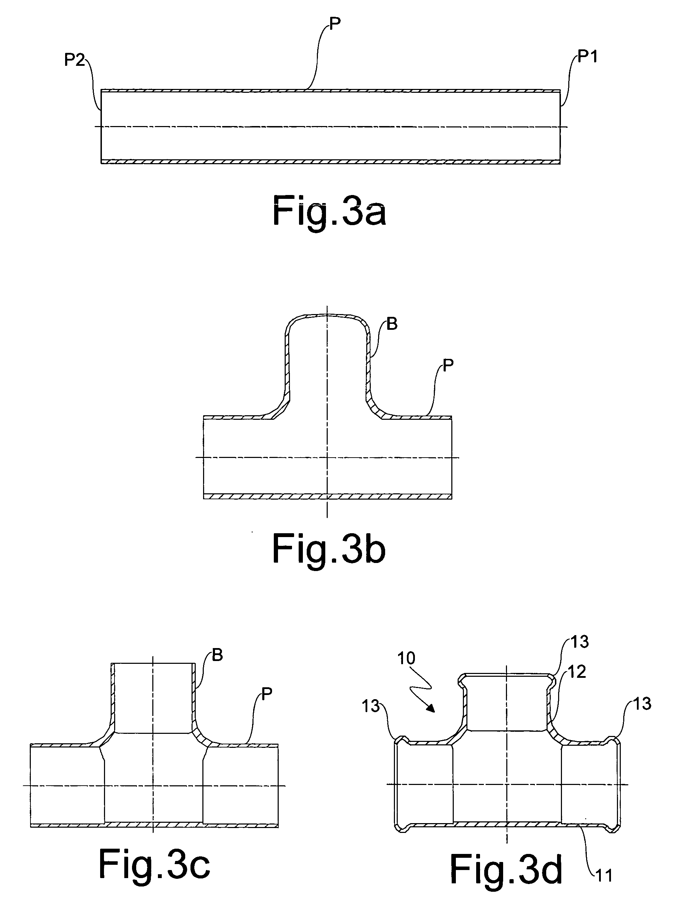

Now referring to Figures 3a to 3d, during the manufacturing process a pipe P is arranged in the first cavity of the mold, the pipe diameter corresponding to the cavity diameter. The two free ends P1, P2 of the pipe P are tightly connected to conduits (not shown) suitable for feeding a fluid under pressure, for example water. A fluid under a predefined pressure is subsequently fed into the pipe P, so that the wall of the pipe P located at the second cavity of the mold is extruded therealong thus forming a branch portion B.

The pressure of the fluid fed into the pipe P made of carbon steel or stainless steel is comprised between 800 and 1200 bar for thicknesses comprised between 1 and 2 mm.

The second mold cavity is conveniently connected to the first cavity through a filleted collar portion, thus allowing to avoid breakage problems of the pipe wall during the extrusion step. Consequently, a filleted connecting portion is obtained between the pipe P and the branch portion B.

Thanks to a number of finite elements simulations and experimental tests it has been found that the radius of the filleted collar portion connecting the two cavities of the mold must be 10 mm for thicknesses t of the T-shaped body portions comprised between 1 mm and 1.5 mm, nominal internal diameters comprised between 15 mm and 27 mm and lengths of the T-shaped body portions comprised between 32 mm and 37 mm, 12 mm for thicknesses t of the T-shaped body portions comprised between 1.5 mm and 2 mm, nominal internal diameters comprised between 28 mm and 54 mm and lengths of the T-shaped body portions comprised between 38 and 69 mm, and 16 mm for thicknesses t of the T-shaped body portions greater than or equal to 2 mm, nominal internal diameters greater than or equal to 55 mm and lengths of the T-shaped body portions greater than or equal to 70 mm.

The result of the extrusion step is shown in Fig. 3b. As it may be seen in the figure, a T-shaped body has been formed starting from the pipe P arranged into the mold, the T-shaped body comprising a straight portion intended to form the longitudinal duct 11 of the press-fitting 10 and a portion perpendicular thereto which is intended to form its branch portion 12.

In order to form the branch portion 12 of the press-fitting 10, the free end of the branch portion B of the pipe P, which has a cap-shape determined by the fluid hydrostatic pressure distribution during the extrusion step, is cut once the T-shaped body is extracted from the mold.

The free ends of the T-shaped body so obtained that are intended to receive pipes by fitting are bored and, depending on the intended use of the fitting 10, hook-shaped bulges 13 or threaded portions may finally be formed at one or more of the free ends. Alternatively, smooth surfaces suitable for the assembly of crimping joints may be maintained at the free ends.

According to the present invention, the fitting 10 comprises a pair of flat walls 16 formed during the hydroforming process at the sides of the T-shaped body in correspondence to the branch portion 12.

Referring again to figure 1, which shows only one side of the connector 10 and therefore only one of the flat walls 16, the flat walls extend from a center plane of the longitudinal duct 11 in the transverse direction T towards the free end of the branch portion 12.

The provision of a pair of flat walls in the hydroformed T-fitting allows to maintain its thickness constant in the central portion. Due to the extrusion process of the branch portion 12, in fact, this portion of the T-shaped press-fitting naturally tends have a reduced thickness, thus potentially penalizing the mechanical performance of the press-fitting.

The flat walls 16 are also structural strengthening elements of the T-shaped press-fitting, in particular with respect to bending forces exerted by the pipes connected thereto during assembly and/or operation.

Moreover, the presence of flat walls allows to provide users with alignment and/or maneuver surfaces during the steps of the manufacturing process following the extrusion of the T-shaped press-fitting, in particular the boring step and the shaping step needed to make the bulges 13.

The invention has been so far described with reference to preferred embodiments. It will be appreciated that there may exists other embodiments which share the same idea of solution, as defined by the scope of protection of the following claims.

## Claims

1. A press-fitting (10) comprising a T-shaped body made of stainless steel or carbon steel and consisting of a duct (11) extending in a longitudinal direction (L) and of a branch portion (12) extending perpendicularly thereto in a transverse direction (T) from an intermediate portion of the duct (11), wherein said T-shaped body is formed as a single piece by way of a hydroforming process, **characterized by** further comprising a pair of flat walls (16) formed during the hydroforming process at the sides of the T-shaped body in correspondence to the branch portion (12), said flat walls (16) extending from a center plane of the longitudinal duct (11) in the transverse direction (T) towards the free end of the branch portion (12).

2. A press-fitting (10) according to claim 1, wherein bulges (13) are formed at one or more of the free ends of the T-shaped body, said bulges (13) having a hook-shape in longitudinal section.

3. A press-fitting (10) according to claim 1 or 2, wherein one or more of the portions of the T-shaped body comprise a bored end portion.

4. A press-fitting (10) according to claim 3, wherein all the portions of the T-shaped body comprise a bored end portion and a bulge (13).

5. A press-fitting (10) according to claim 3 or 4, wherein said bored end portion extends from a free end to a filleted portion (14) connecting the longitudinal duct (11) and the branch portion (12) of the T-shaped body.

6. A press-fitting (10) according to any one of claims 1 to 5, wherein all the portions of the T-shaped body have the same length with respect to a point (O) determined by the intersection between the axis of the longitudinal duct (11) and the axis of the branch portion (12) of the T-shaped body.

7. A method for the manufacturing of a T-shaped press-fitting made of stainless steel or carbon steel, said method comprising the steps of:
i) providing a mold comprising a first cylindrical cavity and a second cylindrical cavity extending perpendicularly thereto from an intermediate portion thereof;
ii) forming a pair of flat walls at the sides of the first cylindrical cavity in correspondence to the second cylindrical cavity;
iii) arranging a pipe (P) made of stainless steel or carbon steel in said first cylindrical cavity, said pipe (P) having a diameter corresponding to the diameter of the first cavity;
iv) tightly connecting the ends (P1, P2) of said pipe (P) to conduits suitable for feeding a fluid under pressure;
v) feeding a fluid in the pipe (P) arranged in the mold from both its ends (P1, P2) at a predefined pressure, so that the pipe wall is extruded along the second cylindrical cavity.

8. A method according to claim 7, wherein the second cylindrical cavity of the mold is connected to the first cylindrical cavity of the mold through a filleted collar portion, and wherein the pressure of the fluid supplied into the tube is comprised between 800 and 1200 bar, and **characterized in that** the radius of the filleted collar portion which connects the two cavities of the mold is 10 mm for thicknesses (t) of the portions of the T-shaped body comprised between 1 mm and 1.5 mm, nominal internal diameters comprised between 15 mm and 27 mm and lengths of the portions of the T-shaped body comprised between 32 mm and 37 mm, 12 mm for thicknesses (t) of the portions of the T- shaped body comprised between 1.5 mm and 2 mm, nominal internal diameters comprised between 28 mm and 54 mm and lengths of the portions of the T-shaped body comprised between 38 and 69 mm, and 16 mm for thicknesses (t) of the portions of the T- shaped body greater than or equal to 2 mm, nominal internal diameters greater than or equal to 55 mm and lengths of the portions of the T- shaped body greater than or equal to 70 mm.

## Patentansprüche

1. Ein Pressfitting (10), umfassend einen T-förmigen Körper aus rostfreiem Stahl oder Karbonstahl und bestehend aus einer Rohrleitung (11), welche sich in einer Längsrichtung (L) erstreckt, und aus einem Verzweigungsbereich (12), welcher sich rechtwinklig dazu in einer Querrichtung (T) von einem mittleren Bereich der Rohrleitung (11) weg erstreckt, wobei der besagte, T-förmige Körper aus einem einzigen Stück mittels eines Innenhochdruckumformungsverfahrens geformt ist, **dadurch gekennzeichnet, dass** es weiterhin umfasst ein Paar von flachen Wänden (16), welche durch ein Innenhochdruckumformungsverfahren an den Seiten des T-förmigen Körpers in Übereinstimmung mit dem Verzweigungsbereich (12) geformt sind, wobei sich die besagten, flachen Wände (16) von einer zentralen Ebene der langgestreckten Rohrleitung (11) in der Querrichtung (T) bis zu dem freien Ende des Verzweigungsbereichs (12) erstrecken.

2. Ein Pressfitting (10) gemäß Anspruch 1, wobei an einem oder mehreren der freien Enden des T-förmigen Körpers Wülste (13) angeformt sind, welche Wülste (13) im Längsschnitt eine hakenförmige Gestalt aufweisen.

3. Ein Pressfitting (10) gemäß Anspruch 1 oder 2, wobei ein oder mehrere Bereiche des T-förmigen Körpers einen durchbohrten Endbereich aufweisen.

4. Ein Pressfitting (10) gemäß Anspruch 3, wobei alle Bereiche des T-förmigen Körpers einen durchbohrten Endbereich und einen Wulst (13) aufweisen.

5. Ein Pressfitting (10) gemäß Anspruch 3 oder 4, wobei sich der durchbohrte Endbereich von einem freien Ende bis zu einem ausgekehlten Bereich (14) erstreckt, welcher die langgestreckte Rohrleitung (11) und den Verzweigungsbereich (12) des T-förmigen Körpers verbindet.

6. Ein Pressfitting (10) gemäß irgendeinem der Ansprüche 1 bis 5, wobei alle Bereich des T-förmigen Körpers die selbe Länge aufweisen in Bezug auf einen Punkt (O), welcher definiert ist durch den Schnitt zwischen der Achse der langgestreckten Rohrleitung (11) und der Achse des Verzweigungsbereichs (12) des T-förmigen Körpers.

7. Ein Verfahren zur Herstellung eines T-förmigen Pressfittings aus rostfreiem Stahl oder Karbonstahl, wobei das besagte Verfahren die folgenden Schritte umfasst:
i) Vorsehen einer Form, umfassend einen ersten, zylindrischen Hohlraum und einen zweiten, zylindrischen Hohlraum, der sich rechtwinklig dazu von einem mittleren Bereich desselben weg erstreckt;
ii) Formen eines Paars von flachen Wänden an den Seiten des ersten zylindrischen Hohlraums, in Übereinstimmung mit dem zweiten zylindrischen Hohlraum;
iii) Anordnen eines Rohrs (P) aus rostfreiem Stahl oder Karbonstahl in dem besagten, zylindrischen Hohlraum, wobei das besagte Rohr (P) einen Durchmesser aufweist entsprechend dem Durchmesser des ersten Hohlraums;
iv) dichtes Verbinden der Enden (P1, P2) des besagten Rohrs (P) mit Leitungen, welche zum Einspeisen eines Fluids unter Druck geeignet sind;
v) Einspeisen eines Fluids unter einem vorgegebenen Druck von beiden Enden (P1, P2) her in das im Inneren der Form angeordnete Rohr (P), so dass die Rohrwand entlang des zweiten zylindrischen Hohlraums hinausgepresst wird.

8. Ein Verfahren gemäß Anspruch 7, wobei der zweite zylindrische Hohlraum der Form mit dem ersten zylindrischen Hohlraum der Form über einen ausgekehlten Kragenbereich verbunden ist, und wobei der Druck des in das Rohr eingespeisten Fluids zwischen 800 und 1200 bar beträgt, sowie **dadurch gekennzeichnet, dass** der Radius des ausgekehlten Kragenbereichs, welcher die beiden Hohlräume der Form miteinander verbindet, 10 mm beträgt für Dicken (t) der Bereiche des T-förmigen Körpers zwischen 1 mm und 1,5 mm, wobei die inneren Nenndurchmesser zwischen 15 mm und 27 mm liegen und die Längen der Bereiche des T-förmigen Körpers zwischen 32 mm und 37 mm, 12 mm für Dicken (t) der Bereiche des T-förmigen Körpers zwischen 1,5 mm und 2 mm, wobei die inneren Nenndurchmesser zwischen 28 mm und 54 mm liegen und die Längen der Bereiche des T-förmigen Körpers zwischen 38 mm und 69 mm, sowie 16 mm für Dicken (t) der Bereiche des T-förmigen Körpers von 2 mm oder mehr, wobei die inneren Nenndurchmesser gleich oder größer sind als 55 mm und die Längen der Bereiche des T-förmigen Körpers gleich oder größer sind als 70 mm.

## Revendications

1. Raccord à presser (10) comprenant un corps en forme de T réalisé à partir d'acier inoxydable ou d'acier au carbone et se composant d'un conduit (11) s'étendant dans une direction longitudinale (L) et d'une partie de branche (12) s'étendant perpendiculairement à ce dernier dans une direction transversale (T) à partir d'une partie intermédiaire du conduit (11), dans lequel ledit corps en forme de T est formé sous la forme d'une seule pièce au moyen d'un procédé d'hydroformage, **caractérisé en ce qu'**il comprend en outre une paire de parois plates (16) formées pendant le procédé d'hydroformage au niveau des côtés du corps en forme de T en correspondance de la partie de branche (12), lesdites parois plates (16) s'étendant à partir d'un plan central du conduit longitudinal (11) dans la direction transversale (T) vers l'extrémité libre de la partie de branche (12).

2. Raccord à presser (10) selon la revendication 1, dans lequel des renflements (13) sont formés à une ou plusieurs des extrémités libres du corps en forme de T, lesdits renflements (13) ayant une forme de crochet dans la section longitudinale.

3. Raccord à presser (10) selon la revendication 1 ou 2, dans lequel les une ou plusieurs des parties du corps en forme de T comprennent une partie d'extrémité alésée.

4. Raccord à presser (10) selon la revendication 3, dans lequel toutes les parties du corps en forme de T comprennent une partie d'extrémité alésée et un renflement (13).

5. Raccord à presser (10) selon la revendication 3 ou 4, dans lequel ladite partie d'extrémité alésée s'étend à partir d'une extrémité libre jusqu'à une partie filetée (14) raccordant le conduit longitudinal (11) et la partie de branche (12) du corps en forme de T.

6. Raccord à presser (10) selon l'une quelconque des revendications 1 à 5, dans lequel toutes les parties du corps en forme de T ont la même longueur par rapport à un point (O) déterminé par l'intersection entre l'axe du conduit longitudinal (11) et l'axe de la partie de branche (12) du corps en forme de T.

7. Procédé pour la fabrication d'un raccord à presser en forme de T réalisé à partir d'acier inoxydable ou d'acier au carbone, ledit procédé comprenant les étapes consistant à :
i) prévoir un moule comprenant une première cavité cylindrique et une seconde cavité cylindrique s'étendant perpendiculairement à cette dernière, à partir de sa partie intermédiaire ;
ii) former une paire de parois plates au niveau des côtés de la première cavité cylindrique en correspondance de la seconde cavité cylindrique ;
iii) agencer un tuyau (P) réalisé à partir d'acier inoxydable ou d'acier au carbone dans ladite première cavité cylindrique, ledit tuyau (P) ayant un diamètre correspondant au diamètre de la première cavité ;
iv) raccorder de manière serrée les extrémités (P1, P2) dudit tuyau (P) aux conduits appropriés pour alimenter un fluide sous pression ;
v) alimenter un fluide dans le tuyau (P) agencé dans le moule à partir de ses deux extrémités (P1, P2) à une pression prédéfinie, de sorte que la paroi de tuyau est extrudée le long de la seconde cavité cylindrique.

8. Procédé selon la revendication 7, dans lequel la seconde cavité cylindrique du moule est raccordée à la première cavité cylindrique du moule par une partie de collier filetée, et dans lequel la pression du fluide amené dans le tube est comprise entre 800 et 1200 bar, et **caractérisé en ce que** le rayon de la partie de collier filetée qui raccorde les deux cavités du moule est de 10 mm pour les épaisseurs (t) des parties du corps en forme de T comprises entre 1 mm et 1,5 mm, les diamètres internes nominaux compris entre 15 mm et 27 mm et les longueurs des parties du corps en forme de T comprises entre 32 mm et 37 mm, de 12 mm pour les épaisseurs (t) des parties du corps en forme de T comprises entre 1,5 mm et 2 mm, les diamètres internes nominaux compris entre 28 mm et 54 mm et les longueurs des parties du corps en forme de T comprises entre 38 et 69 mm et de 16 mm pour les épaisseurs (t) des parties du corps en forme de T supérieures à égales à 2 mm, les diamètres internes nominaux supérieurs ou égaux à 55 mm et les longueurs des parties du corps en forme de T supérieures ou égales à 70 mm.
